# EUROPÄISCHE PATENTSCHRIFT

(11) **EP 2 122 303 B1**
(45) Veröffentlichungstag und Bekanntmachung des Hinweises auf die Patenterteilung: **16.10.2013**
(21) Anmeldenummer: 08707788.9
(22) Anmeldetag: 21.02.2008
(51) Int. Cl.: G01D 5/12

(54) **ANORDNUNG UND VERFAHREN ZUR ABSOLUTBESTIMMUNG DER LINEARPOSITION ODER DER DURCH EINEN WINKEL AUSGEDRÜKTEN DREHPOSITION**
ARRANGEMENT AND METHOD FOR THE ABSOLUTE DETERMINATION OF THE LINEAR POSITION OR THE ROTATIONAL POSITION EXPRESSED AS AN ANGLE
CONFIGURATION ET PROCÉDÉ POUR LA DÉTERMINATION ABSOLUE DE LA POSITION LINÉAIRE OU DE LA POSITION ROTATIVE EXPRIMÉE PAR UN ANGLE

(30) Priorität: 21.02.2007 DE 102007008870
(43) Veröffentlichungstag der Anmeldung: 25.11.2009
(73) Patentinhaber: MEAS Deutschland GmbH, 44227 Dortmund (DE)
(72) Erfinder: BARTOS, Axel, 45731 Waltrop (DE); DETTMANN, Fritz, 35619 Braunfels (DE); MEISENBERG, Armin, 44227 Dortmund (DE)
(74) Vertreter: Tilmann, Max Wilhelm
(86) Internationale Anmeldenummer: PCT/EP2008/001375
(87) Internationale Veröffentlichungsnummer: WO 2008/101702

(56) Entgegenhaltungen:
- DE-A1- 4 436 784
- US-A- 5 434 602
- US-A1- 2004 173 735

## Beschreibung

Die Erfindung betrifft ein magnetisches Längen- oder Winkelmesssystem, wie es beispielsweise zur automatischen Bestimmung von Positionen, Längen oder Winkeln im Maschinenbau, in der Automobiltechnik oder der Feinmechanik eingesetzt wird. Die entsprechenden Größen liefert das "absolute" System unabhängig vom Bewegungszustand der Systemkomponenten, insbesondere also auch im Zustand der Ruhe und nimmt die Priorität der deutschen Patentanmeldung 10 2007 008 870.3 in Anspruch.

Solche absoluten magnetischen Längen- oder Winkelmesssysteme sind bekannt. Als erstes sei hier die in der Offenlegungsschrift DE 197 54 524 dargestellte Messanordnung genannt. Als Maßstab dient hier ein auf magnetischem Material aufgebrachtes Gewinde, bei dem sich von Windung zu Windung die Ganghöhe individuell ändert, insbesondere nimmt die Ganghöhe entlang der Messrichtung x monoton zu. Mindestens zwei Magnetfeldsensoren, in Richtung senkrecht zur Messrichtung beabstandet, sind beim gleichen x-Wert in dem dem Maßstab gegenüberstehenden Messkopf vorhanden. Mit ihrer Hilfe wird die jeweilige Gewindesteigung erkannt und kann so der absoluten Position zugeordnet werden. Nachteilig wirkt sich hier aus, dass das Material des Maßstabs weichmagnetisch sein muss. Störfelder magnetisieren technisch einsetzbare Magnetwerkstoffe, was zu erheblichen Messfehlern führen kann. Weiterhin sind bei variabler Ganghöhe auch immer sehr geringe Werte für diese Ganghöhe erforderlich. Bei diesen sind die detektierbaren Magnetfeldänderungen aber besonders gering, wenn nicht mit minimalen Abständen zwischen Sensor und Maßstab gearbeitet wird. Weiterhin sind für jeden Sensor aufwendig Hilfsmagnete zu justieren.

In der Anordnung nach der DE 199 10 636 (Fig. 12, Anspruch 16 und 17) entfällt der letzte Nachteil, da hier ein zylinderförmiger hartmagnetischer Maßstab benutzt wird, in den durch Aufmagnetisieren ein magnetisches Gewinde mit variabler Ganghöhe erzeugt wird. Durch zwei in Messrichtung beabstandete magnetoresistive Winkelsensoren kann der Differenzwinkel der Feldrichtungen zwischen den Positionen der beiden Sensoren ermittelt werden. Mit anisotrop magnetoresistiven Sensoren ist diese Differenz der Position absolut zuzuordnen, solange sie unter 180° bleibt, mit Hallsensoren oder GMR-Sensoren bis zu 360°. Damit ist die Gesamtlänge der Absolutmessung dadurch eingeschränkt, dass zwischen den beiden Sensoren am Ende der Messstrecke nur eine Ganghöhe mehr als am Anfang liegen darf. Hochauflösung wird durch genaue Auswertung des Winkelwertes eines der beiden Sensoren erreicht. Als weiterer Nachteil kommt hinzu, dass die Herstellung des magnetischen Gewindestabes sehr aufwendig ist, insbesondere bei geringer Ganghöhe, die aber für eine hohe Auflösung der Längenbestimmung nötig ist. Eine Verdrehung des Maßstabs in allen seinen Teilen muss verhindert werden, da sie sich direkt in Messfehlern für die Hochauflösung umsetzt.

Diesen letzten Nachteil weist eine Anordnung nach WO 2006/035055 nicht mehr auf. Hier wird ein zylindrischer Maßstab vorgeschlagen, der in Messrichtung in ihrer Polung alternierende magnetische Segmente enthält, deren Länge in Messrichtung unterschiedlich ist. Damit spielen Verdrehungen des Maßstabs für das Messergebnis keine Rolle. Die Erfindung nach WO 2006/035055 bezieht sich aber nicht nur auf zylindrische Maßstäbe sondern auf alle Maßstabsquerschnitte mit alternierender Polung der Segmente von unterschiedlicher Länge. Mit Hilfe zweier in Messrichtung beabstandeter Sensoren, die den Winkel der Richtung des Magnetfeldes gegen die Messrichtung erfassen, wird auf die Phasendifferenz zwischen beiden Orten geschlossen, die proportional zur Position eines der beiden Sensoren ist. Zur Erhöhung der Auflösung der Positionsangabe wird aus der Phasendifferenz zunächst ermittelt, das wievielte Segment des Maßstabs dem einen Sensor gegenübersteht, und aus dessen Ergebnis für den Winkel der Feldrichtung ergibt sich dann, wie weit der Sensor gegenüber dem Segmentanfang vorgerückt ist. Die hier verwendeten Magnetfeldsensoren bestehen jeweils aus zwei Sensorelementen, die sich am gleichen Ort bezüglich der Messrichtung befinden und vom Feldwinkel abhängige Signale liefern. Für die Auswertung wird angenommen, dass der Winkel innerhalb jedes Segmentes linear mit der Position ansteigt, oder anders ausgedrückt, dass die Sensoren zum Sinus und zum Cosinus des Feldwinkels proportionale Werte bezogen auf die jeweilige Segmentlänge liefern. Der wirkliche Verlauf weicht jedoch aus zwei Gründen von diesen vereinfachenden Annahmen ab. Einmal enthält das Magnetfeld der Segmente Oberwellenanteile, die mit dem Abstand vom Maßstab geringer werden, aber in einem Maße, das durch die Segmentlänge bestimmt wird. Zum zweiten werden in den magnetoresistiven Sensoren zusätzliche Oberwellenanteile erzeugt, und zwar um so stärkere, je geringer die auf den Sensor wirkende Feldstärke ist. Die Feldstärke im Sensorabstand variiert jedoch stark mit der Segmentlänge, so dass entlang der Messrichtung auch noch ständig veränderliche Oberwellenanteile wirksam werden. Deshalb ist die Messgenauigkeit soweit eingeschränkt, dass die Zuordnung des ermittelten Signals zu einem bestimmten Segment nur für eine begrenzte Zahl von Segmenten zur Anwendung kommen kann und dass auch die Längenauflösung innerhalb der Segmentlänge beeinträchtigt wird.

In der DE 100 10 042 werden lineare magnetische Messsysteme zur Verwendung im Automobilbau vorgeschlagen. Es wird eine große Zahl unterschiedlicher Konfigurationen für den Maßstab angegeben. Das Problem der Absolutmessung wird in der genannten Schrift jedoch an keiner Stelle erwähnt und lässt sich auch nicht teilweise aus allen dargestellten Sachverhalten erkennen. Damit sind auch aus dieser Schrift keine Hinweise zu entnehmen, wie absolute Messsysteme großer Messlänge und hoher Auflösung zu gestalten sind.

Die US 2004/173735 A1 betrifft einen Positionscodierer, der eine mit einem Muster bitcodierte Spur, umfasst. Das Muster enthält eine Vielzahl jeweils nur einmal vorhandener Unterfolgen ("unique subsequences") von Bits. Der Positionscodierer umfasst ferner Sensoren, um das Muster zu detektieren, während sich die Spur bewegt, ein Prozessorelement, um einen Teil mindestens einer der Unterfolgen aus den durch die Sensoren bereitgestellten Signale zu detektieren um entweder eine absolute oder eine inkrementale Position der Spur zu bestimmen.

Die DE 44 36 784 A1 zeigt ein ähnliches Meßsystem mit einem Maßstab, der Striche unterschiedlicher Strichstärken aufweist. Durch die Striche wird ein Code-Muster auf dem Maßstab realisiert, durch Sensoren detektiert und durch Vergleich mit dem gespeicherten Originalcode die Position erkannt.

Bei dem Längenmesssystem für Drucker der US-A-5 434 602 werden zwei parallel verlaufende Magnetspuren mit Magnetsegmenten wechselnder Polarität jeweils gleicher Länge in Messrichtung aber mit deutlichem Unterschied in der Länge der Segmente der beiden Spuren verwendet. Für beide Spuren sind Magnetsensoren vorhanden und die Längenmessung erfolgt inkremental für beide Spuren.

Die Aufgabe der Erfindung besteht darin, Anordnungen und Verfahren für absolute magnetische Längen- und Winkelmesssysteme anzugeben, die bei einfachem Aufbau erhöhte Auflösungen, geringere Messfehler und größere Messlängen ermöglichen.

Diese Aufgabe wird durch die in Anspruch 1 angegebene Anordnung und das in Anspruch 17 beschriebene Verfahren gelöst. Weitere Unteransprüche enthalten vorteilhafte Ausführungen.

Nach Anspruch 1 ist der Maßstab der Anordnung zur absoluten Längen- der Winkelbestimmung in Messrichtung aus Gruppen von magnetischen Segmenten aufgebaut, die Längen der magnetischen Segmente in mindestens einer der Gruppen stimmen untereinander überein und die Längen der magnetischen Segmente der unterschiedlichen Gruppen sind voneinander verschieden. Die Gruppen von magnetischen Segmenten sind in einer einzigen Spur, also in Messrichtung hintereinander, angeordnet. Damit sind vorteilhafter Weise gegenseitige, Messfehler verursachende Störungen im Magnetfeldverlauf wie bei bekannten mehrspurigen Magnetmaßstäben absoluter Messanordnungen grundsätzlich ausgeschlossen.

Durch die Nutzung eines Aufbaus von magnetischen Maßstäben aus Gruppen von magnetischen Segmenten, die gleiche Längen innerhalb der Gruppen aufweisen können und von Gruppe zu Gruppe unterschiedlich lang sind, gelingt es, den Vorteil der absoluten Winkel- oder Längenpositionsbestimmung zu nutzen, der unterschiedliche Segmentlängen voraussetzt, und dabei den bekannten Vorteil der hohen Auflösung, Genauigkeit und einer großen Messlänge von inkrementalen Messanordnungen, die mit konstanter Segmentlänge arbeiten, weitgehend beizubehalten.

Eine absolute Positionsbestimmung zeichnet sich nicht allein dadurch aus, dass der Positionswert unabhängig vom Bewegungszustand zwischen Maßstab und den Sensoren sofort mit einer einzigen Messung ermittelbar ist, sondern auch dadurch, dass der erhaltene Positionswert fest an die Maßstabsstruktur gebunden ist und eine Kalibrierung des Maßstabs nur bei seiner Herstellung möglich ist. Magnetische Maßstäbe weisen Besonderheiten auf, die trotz der fehlerfreien Einhaltung einer vorgegebenen Segmentlängenverteilung beim Magnetisieren des Maßstabsmaterials dazu führen, dass in der Nähe des Beginns und des Endes des Maßstabs immer starke Abweichungen von der normalen Feldrichtungsverteilung über den Segmenten, die von den Enden entfernt sind, auftreten. Das gilt mindestens für jeweils zwei Segmente. Erfindungsgemäß werden nun an beiden Maßstabsenden Gruppen von gleich langen Segmenten angeordnet. Hier liefern die beabstandeten Sensoren keine Änderung der Phasendifferenz, so dass zeigt wird, dass der Messbereich überschritten ist. Vorteilhafterweise lässt sich durch Nutzung dieser über den Messbereich hinausgehenden Anzeige mit dem System selbst eine Justierung des Maßstabs an dem Teil, dessen Bewegung eigentlich verfolgt werden soll, kontrollieren.

Bei bekannten Maßstäben mit variabler Länge der magnetischen Segmente gibt es zwei weitere, die Genauigkeit der Positionsmessung erheblich einschränkende Besonderheiten. Diese bestehen in der Zunahme der Magnetfeldstärke mit der Segmentlänge und in der Verschiebung des Nulldurchganges einer Komponente des Feldes und damit des Phasenwertes in Richtung des jeweils kürzeren Segmentes, so dass dieses mit zunehmendem Abstand zwischen Sensor und Maßstabsoberfläche immer kürzer erscheint. Erfindungsgemäß können diese Abweichungen in einem erheblichen Maße dadurch verringert werden, dass die Dicke der magnetischen Segmente des Maßstabs um so größer ist, je geringer ihre Länge in Messrichtung ist. Das kann entweder dadurch erreicht sein, dass die den Maßstab bildende Magnetschicht eine ortsabhängige Dicke hat, oder in vorteilhafter Weise die Tiefe, bis zu der das Material in jedem Segment magnetisiert ist, von der Segmentlänge abhängig gewählt ist, wobei die Dicke des magnetisierbaren Materials auf einem konstanten Wert bleibt. Erfindungsgemäß ist es auch möglich, dass die Oberfläche des Maßstabs mit einer nichtmagnetischen Schicht abgedeckt ist, deren Dicke ortsabhängig um so größer gewählt ist, je größer die Länge der Segmente an dem entsprechenden Ort ist. Damit steigt der Abstand zum Sensor mit zunehmender Segmentlänge an, was zu einer Feldabsenkung führt. Hier ist allerdings eine Korrektur der Segmentlänge angepasst an die Dicke der nichtmagnetischen Schicht vorzunehmen, damit die Verschiebung der Nulldurchgänge der Feldkomponenten kompensiert wird.

Entsprechend einer bevorzugten Ausführungsform der Erfindung werden bei einem magnetischen Maßstab die jeweils zwei neben einander befindlichen magnetischen Segmente zu einer Gruppe zusammengefasst und weisen dieselbe Länge auf. Das hat einerseits den Vorteil, dass die Lage des Nulldurchgangs des Phasenwertes an der Trennlinie der beiden gleich langen Segmente unabhängig vom Abstand zwischen Sensor und Maßstabsoberfläche bleibt und das andererseits bei gleicher Änderung der Länge der Segmente eine doppelt so große Maßstabslänge erreicht wird. Dabei kann durch Vergrößerung des Abstandes der beiden Sensoren zur Phasendifferenzbestimmung derselbe Phasengradient pro Messlängeneinheit und damit dieselbe Genauigkeit bei der Bestimmung des dem ersten Sensor gegenüber liegenden Segmentes wie im Falle des bekannten Maßstabs mit monotoner Längenänderung der Segmente gehalten werden.

Als Messelemente sind für die Anordnungen bevorzugt magnetoresistive Sensoren einsetzbar. Es können sowohl anisotrop magnetoresistive Sensoren als auch GMR-Sensoren benutzt werden, die jeweils als Messelemente zur Bestimmung des Richtungswinkels des Magnetfeldes ausgebildet sind. Es ist zu berücksichtigen, dass der Messbereich, in dem eindeutig ein bestimmter Feldwinkel als Messergebnis erhalten werden kann, für anisotrop magnetoresistive Sensoren auf 180° beschränkt ist, während er für GMR-Sensoren 360° beträgt. Magnetoresistive Sensoren enthalten jeweils zwei Sensorelemente, die bevorzugt die Form von aus magnetoresistiven Streifenwiderständen aufgebauten Messbrücken haben. Diese beiden Messbrücken sind entweder symmetrisch um dieselbe x-Koordinate des Sensors angeordnet und gegeneinander um einen Winkel verdreht, der einem Viertel ihres eindeutigen Messbereichs entspricht, oder die beiden Messbrücken sind in Messrichtung des Maßstabs in einem Abstand angeordnet, der durch Fortschreiten in Messrichtung einer durch den Maßstab bedingten Felddrehung um den angegebenen Wert gleich kommt. Der Abstand beträgt also für anisotrop magnetoresistive Sensoren ein Viertel der Segmentlänge und für GMR-Sensoren eine halbe Segmentlänge. Mit Vorteil werden Sensoren mit verdrehten Messbrücken eingesetzt, wenn nur wenige Segmente gleicher Länge im Maßstab vorkommen und wenn die Längen der Segmente stark voneinander abweichen. Für Maßstäbe mit einer Vielzahl von gleich langen Segmenten und bei geringerer Änderung der Segmentlänge bieten Sensoren mit versetzten Messbrücken bedeutende Vorteile, insbesondere, wenn die Verteilung der magnetoresistiven Widerstandsstreifen der Messbrücken so gewählt wurde, dass Oberwellenanteile der Magnetfeldverteilung des Maßstabs aus den Brückensignalen herausgefiltert werden (s. z. B. DE 10 2005 009 923). Mit solchen Messanordnungen ist die hohe Auflösung und Genauigkeit inkrementaler Messsysteme auch bei Absolutmessungen erreichbar.

Zur Ermittlung einer Phasendifferenz, aus der dann die Lage eines bestimmten Segmentes und so die gesuchte Absolutposition abgeleitet werden kann, sind zwei Sensoren mit jeweils zwei Sensorelementen nötig. Die Zahl der Segmente, deren Lage dabei einwandfrei erkennbar ist, wird von den Messfehlern der Phasendifferenz begrenzt. Die so bedingte Grenze wird erfindungsgemäß dadurch auf wesentlich größeren Werte erweitert, dass auf einem gemeinsamen Sensorträger ein dritter gleichartiger Sensor eingesetzt wird, dessen Abstand zum ersten Sensor mindestens doppelt so groß ist wie der zwischen dem ersten und zweiten Sensor. Der Abstand zwischen dem ersten und zweiten Sensor wird so bemessen, dass der mit ihm zu ermittelnde Phasenunterschied bei Bewegung des Sensorträgers über die gesamte Maßstabslänge den Eindeutigkeitsbereich der Sensoren nicht überschreitet. Damit ist eine Zuordnung zu einem bestimmten Segment des Maßstabs im Prinzip immer möglich, sie kann aber durch Messfehler soweit verfälscht sein, dass nur ein Umgebungsbereich des Segmentes ermittelt werden kann. Die Phasendifferenz zwischen dem ersten und dritten Sensor steigt wegen des größeren Abstandes bei Bewegung des Sensorträgers stärker an und ermöglicht so eine Zuordnung dieser Phasendifferenz zu einem Segment mit wesentlich kleinerem Fehler. Da diese Phasendifferenz jedoch die Eindeutigkeitsgrenze der Sensoren überschreitet, sind zur Ermittlung des bestimmten Segmentes beide Differenzen erforderlich. Durch Hinzunahme eines weiteren Sensors im Vergleich zu bekannten Anordnungen wird so die Erhöhung der Zahl der Segmente des Maßstabes erheblich steigerbar. Das kann zur Erhöhung der Maßstabslänge oder zur Erhöhung der Auflösung und der Messgenauigkeit genutzt werden.

Anordnungen zur Winkelmessung mit kreisförmigen Maßstäben (Polrädern) lassen sich auf der Basis der Erfindung vorteilhaft realisieren. Dabei werden bevorzugt Polräder benutzt, bei denen die Anordnung der magnetischen Segmente spiegelsymmetrisch in Bezug auf eine Ebene ist, in der die Drehachse liegt. Solche Polräder können beispielsweise nur zwei Gruppen von jeweils gleich langen Segmenten aufweisen. Bei Anordnung von fünf Sensoren mit einem Eindeutigkeitsbereich von 180°, deren Aufbau vorteilhafter Weise zur Oberwellenfilterung geeignet sein sollte, kann der Winkelwert des Polrades eindeutig über eine volle Umdrehung und mit einer Auflösung und Genauigkeit, die der einer inkrementalen Messung entspricht, ermittelt werden. Dasselbe Ergebnis kann bei Nutzung von drei Sensoren mit einem Eindeutigkeitsbereich von 360° erhalten werden.

Ähnliche Eigenschaften lassen sich auch mit einem anderen spiegelsymmetrischen Polrad mit n Segmenten erzielen, bei dem die Segmentlänge derart variiert, dass der Winkel der Feldrichtung β bei einem vollen Umlauf von α = 0 bis 360° um das Polrades durch die Beziehung β(α) = α· (1 + n/2) + A· sin(α) gegeben ist (A = const.). Hier werden zwei gleiche Sensorpaare mit jeweils zwei beabstandeten Sensoren benötigt, die um einen bestimmten Winkel versetzt am Umfang des Polrades, der vorzugsweise 90° beträgt, angeordnet werden Die Sensorzahl ist nicht vom Eindeutigkeitsbereich der Sensoren abhängig. Bei dieser Anordnung werden zwei Phasendifferenzen durch die Sensorpaare ermittelt, die mit dem Drehwinkel des Polrades durch Sinus- bzw. Kosinusfunktionen verknüpft sind. Die Ermittlung des Drehwinkels erfolgt also analog zu der der Position innerhalb des Bereiches eines Segmentes durch Erkennung eines Quadranten und eine Arcustangensinterpolation. Ein besonderer Vorteil der hier beschriebenen Anordnung besteht darin, dass benachbarte Segmente hier in ihrer Länge wenig Unterschied aufweisen. Damit ist die Verschiebung des Ortes des Nulldurchganges einer Feldkomponente mit dem Abstand zwischen Sensor und Maßstabsoberfläche und damit die Änderung der effektiv wirkenden Länge der Segmente vernachlässigbar. Bei monoton wachsender Segmentlänge über den Polradumfang wären gerade das längste und das kürzeste Segment nebeneinander angeordnet, und hier wäre der Verschiebungsfehler maximal und würde den Messfehler der gesamten Anordnung bestimmen.

Das Verfahren zur Absolutbestimmung von Linear- oder Drehpositionen unter Nutzung einer der in den Ansprüchen beschriebenen Anordnung besteht darin, dass aus einer Anzahl von Sensorsignalen in einer Auswerteeinheit ein der jeweiligen Position eindeutig zugeordnetes Ausgangssignal berechnet wird. Im einfachsten Fall werden Signale von jedem Sensorelement von zwei Sensoren, die je aus zwei Sensorelementen bestehen und die in einem bestimmten Abstand zueinander in Maßstabsnähe angeordnet sind, benutzt, um die Winkel der Feldrichtungen an den beiden Sensororten nach bekannten Verfahren zu bestimmen, zum Beispiel durch eine Arcustangensinterpolation. Durch Differenzbildung wird daraus die Phasendifferenz gebildet. Diese ist der gesuchten Position direkt zugeordnet. Die so erhaltenen Positionswerte sind von eingeschränkter Genauigkeit. Diese kann dadurch verbessert werden, dass aus der Phasendifferenz zunächst ermittelt wird, das wievielte Segment des Maßstabs einem der beiden Sensoren gegenübersteht. Aus dem Winkel der Feldrichtung, die von diesem Sensor ermittelt wurde, wird dann unter Zugrundelegung eines linearen Winkelanstiegs über die Segmentlänge bestimmt, wie weit der Sensor vom Anfang des Segmentes bei dieser Messung entfernt ist. Diese beiden Signalanteile ergeben ein weit genaueres Ergebnis für die Position. Weitere Verbesserungen der Messgenauigkeit werden erfindungsgemäß dadurch erreicht, dass für zwei oder mehr Sensoren die entsprechenden den Sensoren gegenüberstehenden Segmente ermittelt werden und durch Berücksichtigen der gemessenen Winkel der Feldrichtung am Ort der Sensoren die Werte für die Positionen der zwei oder mehr Sensoren erhalten werden. Ein verbesserter Endwert für die Position ergibt sich dann durch Mittelung der Positionsergebnisse unter Berücksichtigung der Sensorabstände.

Entsprechend der Erfindung können für die Absolutlängenmessung an Maßstäben mit den dargestellten Merkmalen nicht nur Sensoren mit zwei Sensorelementebrücken, die gegeneinander um Winkel von einem Viertel ihres Eindeutigkeitsbereiches verdreht sind, benutzt werden, sondern auch Sensoren, deren Sensorelementebrücken in Messrichtung gegeneinander versetzt angeordnet sind. Entspricht der Versatz einem Viertel der Segmentlänge bei Sensoren mit einem Eindeutigkeitsbereich von 180° (z.B. anisotrop magnetoresistive Sensoren) bzw. der Hälfte der Segmentlänge bei Sensoren mit einem Eindeutigkeitsbereich von 360° (z. B. GMR-Sensoren), so stellt die Anwendung der Arcustangensinterpolation bei der Ermittlung des Winkel der Feldrichtung kein Problem dar, da die Felder des Segmentes bei diesem Versatz dann um ein Viertel des Eindeutigkeitsbereiches verdreht sind. Bei variabler Segmentlänge ist diese Übereinstimmung prinzipiell nicht gegeben. Wie sich herausstellte, kann trotzdem zunächst die einfache Arcustangensinterpolation benutzt werden. Aus der mit diesem vorläufigen Ergebnis gebildeten Phasendifferenz erhält man einen Näherungswert für die Nummer des gesuchten Segmentes und damit einen Näherungswert für die wirkliche Segmentlänge. Mit diesem Wert wird dann die Interpolation zur Winkelbestimmung der Feldrichtung wiederholt, womit sich eine bessere Näherung ergibt. Das Verfahren führt iterativ zu immer genaueren Ergebnissen. Praktisch reichen in den meisten Fällen zwei Iterationsschritte aus. Es ist vorteilhaft, Sensoren mit einem linearen Versatz der Sensorelementebrücken zu verwenden, wenn bei diesen die Verteilung der magnetoresistiven Schichtwiderstände dermaßen gestaltet ist, dass sie die Unterdrückung von Oberwellen bewirkt. Diese Verteilung kann optimal zwar nur für eine ganz bestimmte Segmentlänge festgelegt werden, sie ist aber auch bei Abweichungen von dieser immer noch teilweise wirksam. So können höhere Messgenauigkeiten in der Positionsermittlung erreicht werden. Besonders vorteilhaft ist das für den Fall, dass der Maßstab eine Vielzahl von Segmenten gleicher Länge oder Segmente mit wenig unterschiedlicher Länge aufweist.

Die Erfindung soll nachstehend an Ausführungsbeispielen näher erläutert werden. In der zugehörigen Zeichnung ist folgendes zu sehen:
- Fig. 1:: Ein Absolutlängenmesssystem entsprechend der Erfindung mit zwei Sensoren,
- Fig. 2:: der Phasenverlauf eines Maßstabs mit verschiedenen Segmenten,
- Fig. 3a:: der Magnetfeldverlauf eines Maßstabs mit verschiedenen Segmenten,
- Fig. 3b:: zur Feldkorrektur möglicher Verlauf der Dicke des Magnetmaterials,
- Fig. 4a:: ein Absolutlängenmesssystem entsprechend der Erfindung mit linearem Verlauf der Phasendifferenz und mit drei Sensoren,
- Fig. 4b:: der Verlauf verschiedener Phasendifferenzen der Anordnung nach Fig. 4a,
- Fig. 4c:: Periodenlängen des linearen Messsystems nach Fig. 4a,
- Fig. 5a:: absolutes Winkelmesssystem entsprechend der Erfindung mit zwei Gruppen von Segmenten,
- Fig. 5b:: Phasendifferenzen verschiedener Sensoren des Systems nach Fig. 5a,
- Fig. 5c:: Phasendifferenzen des Systems nach Fig. 5a mit GMR-Sensoren,
- Fig. 6a:: absolutes Winkelmesssystem entsprechend der Erfindung mit symmetrisch angeordneten Segmentpaaren unterschiedlicher Länge,
- Fig. 6b:: Verteilung der Segmentlänge des Systems nach Fig. 6a für sinusförmige Phasendifferenz,
- Fig. 6c:: Phasendifferenzen als Funktion des Drehwinkels für das System nach Fig. 6a.

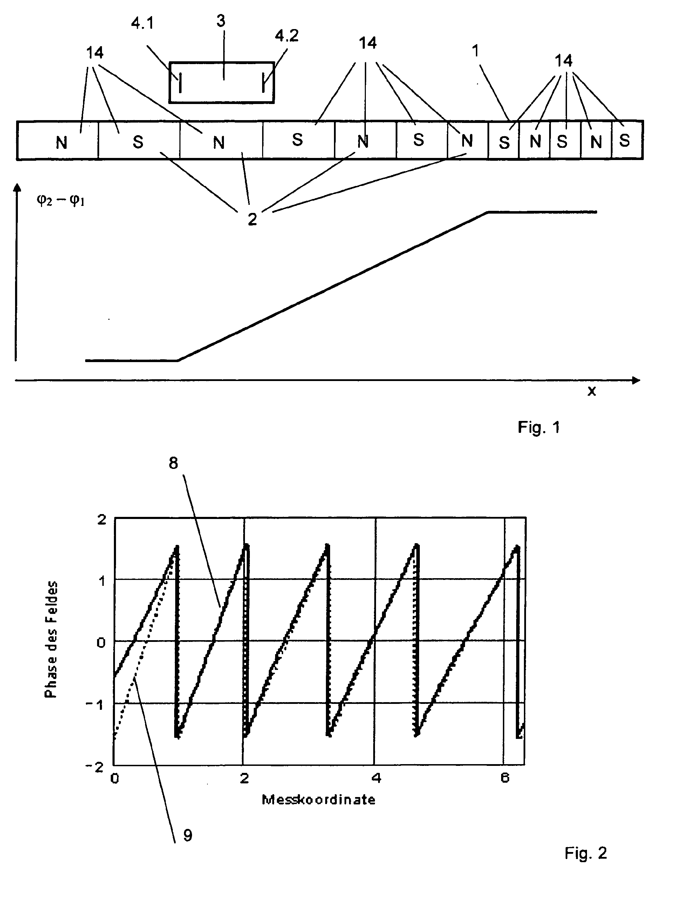

In Fig. 1 ist ein absolutes Längenmesssystem entsprechend der Erfindung schematisch dargestellt und eine Eichfunktion des Systems. Ein magnetischer Maßstab 1 besteht aus einer Anzahl von dauermagnetischen Segmenten 2, die durch die Angabe N (Nordpol) und S (Südpol) unterschieden sind. Durch diese Angabe wird ausgedrückt, dass direkt nebeneinander befindliche Segmente 2 in entgegen gesetzter Richtung magnetisiert sind. Ein senkrecht zur Zeichenebene magnetisierter Maßstab zeigt an seiner Oberfläche die angegebenen Pole. Für das hier zu beschreibende Ausführungsbeispiel wird jedoch angenommen, dass die Segmente N eine nach rechts zeigende und die Segmente S eine nach links zeigende Magnetisierungsrichtung aufweisen. Die Segmente 2 des Maßstabs sind in Gruppen 14 zusammengefasst. Eine erste Gruppe 14 umfasst von links die ersten drei Segmente 2, die jeweils die gleiche Länge in Messrichtung x haben. Eine zweite Gruppe 14 im mittleren Bereich enthält vier Segmente 2, die sich in Messrichtung über unterschiedliche Längen erstrecken. Die dritte Gruppe 14 am rechten Ende des Maßstabs 1 ist aus fünf Segmenten 2 zusammengesetzt, deren Längen miteinander übereinstimmen. Über dem Maßstab 1 befindet sich ein in Messrichtung x frei verschiebbarer Sensorträger 3, auf dem zwei Sensoren 4.1 und 4.2 in einem bestimmten Abstand angeordnet sind. Im betrachteten Ausführungsbeispiel handelt es sich dabei um anisotrop magnetoresistive Sensoren. Jeder Sensor 4.1, 4.2 besteht aus zwei Sensorelementen. Die Sensorelemente sind Wheatstone-Brücken, die aus je vier durch anisotrop magnetoresistive Schichtstreifen gebildete Widerstände bestehen, deren Widerstandswerte von der Richtung des einwirkenden magnetischen Feldes, hier von dem des Maßstabs 1, abhängig sind. Bei Drehung des Feldes um 180° durchläuft die Widerstandsänderung eine volle Periode. Damit sind auch die Ausgangssignale der Brücken mit diesem Winkel periodisch. Bei linearem Anstieg des Richtungswinkels des Magnetfeldes des Maßstabs 1 erfolgt die Ausgangssignaländerung der Brücken sinusförmig bei Bewegung des Sensorträgers 3 in Messrichtung x. Bei einer Verdrehung der jeweils zwei Sensorelemente der Sensoren 4.1, 4.2 gegeneinander um 45° auf dem Sensorträger 3 tritt so eine Phasenverschiebung zwischen den jeweils zwei Brückensignalen um ein Viertel der Periodenlänge auf. Eine Brücke liefert damit ein Signal, das proportional zu sin(2 · π · x/λ) und die andere Brücke ein Signal, das proportional zu cos(2 · π ·x/λ) ist, mit λ als der Länge eines Segmentes 2. Durch die Arcustangensinterpolation kann aus diesen beiden Signalen der Winkel der Feldrichtung am Ort des Sensors ermittelt werden, der im eindeutigen Bereich auch als Phase bezeichnet wird. Die Orte der Sensoren 4.1, 4.2 sind in Fig.1 ohne Ausdehnung in Messrichtung x dargestellt. Die gezeigten Striche sind die Symmetrielinien jeweils beider Wheatstone-Brücken der Sensoren 4.1, 4.2, die in der Umgebung der Striche angeordnet sind.

Im unteren Teil der Fig. 1 ist in einer Grafik die in einer in der Figur nicht gezeigten Auswerteeinheit ermittelte Phasendifferenz ϕ₂-ϕ₁, die sich bei der Bewegung des Sensorträgers 3 in Messrichtung x entlang des Maßstabs 1 ergibt. Im in der Mitte befindlichen Bereich der mit steigendem x abnehmenden Segmentlänge steigt die Phasendifferenz ϕ₂- ϕ₁ mit zunehmendem x an. Dem Wert der Phasendifferenz ϕ₂-ϕ₁ ist hier der x-Wert, bei dem sich der Sensor 4.1 befindet, eindeutig zugeordnet. An beiden Enden des Maßstabs 1 sind Gruppen von Segmenten 14 mit untereinander übereinstimmenden Längen angeordnet. Hier verharrt die Phasendifferenz bei Bewegung des Sensorträgers 3 jeweils auf einem konstanten Wert. Aus diesem Wert ist erkennbar, ob der Messbereich des Systems nach oben oder nach unten verlassen wurde. Beginn und Ende des Messbereiches sind genau zu ermitteln, da hier die Phase des ersten Sensors 4.1 einen Null-durchgang aufweist. Das kann benutzt werden, um Justierungen der Teile des Messsystems gegenüber der Position der Körper vorzunehmen, deren Lage relativ zueinander zu kontrollieren die eigentliche Messaufgabe darstellt.

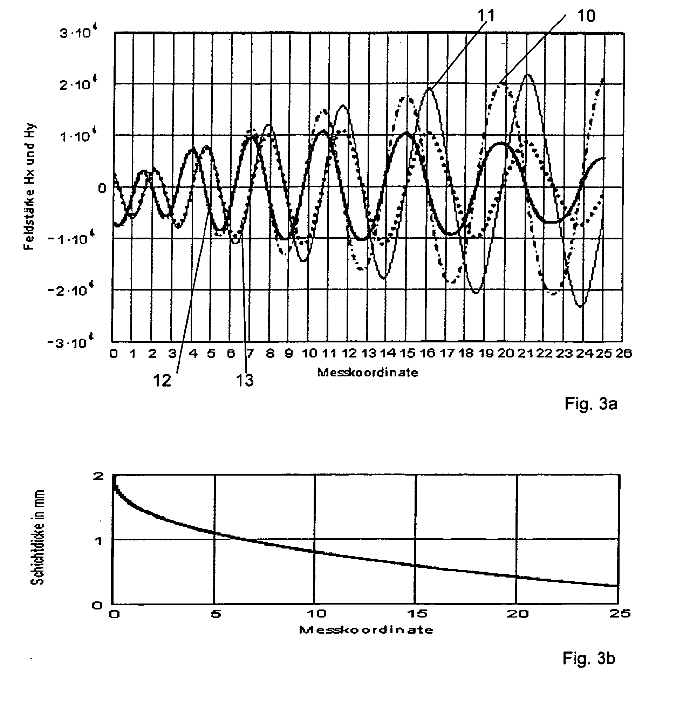

Für den Bereich der Randsegmente des Maßstabs 1 sind keine Phasendifferenzen ϕ₂-(ϕ₁ in der Grafik vorhanden. Die Begründung dazu ist aus Fig. 2 und Fig.3 ablesbar. Fig. 2 zeigt die Phase des Feldes 8 über die ersten fünf Segmente 2 eines Maßstabs im Vergleich mit deren idealen Verlauf 9, der eine linear ansteigende Winkelzunahme um 180° (entspricht im Bogenmaß π) über die Segmentlänge voraussetzt. Es ist unverkennbar, dass beide Anforderungen vom Randsegment nicht erfüllt werden. In Fig. 3a sind die vom Maßstab erzeugten Feldstärken Hₓ 10 und H_{y} 11 für eine Anzahl von Segmenten 2 für einen Maßstab 1, der sich über 25 mm erstreckt, dargestellt. Hier zeigt sich, dass über dem zweiten Segment vom Rand des Maßstabs 1 eine weit geringere magnetische Feldstärke herrscht als über randfernen Segmenten 2. Diese geringe Feldstärke führt in den magnetoresistiven Sensoren 4.1, 4.2 zu fehlerbehafteten Winkelwerten. Somit ist klar, dass die jeweils mindestens zwei Randsegmente von magnetischen Maßstäben für eine absolute Positionsbestimmung nicht geeignet sind. Eine Justierung eines Körpers, dessen Position ermittelt werden soll, am mechanischen Ende des Maßstabs 1 ist nicht möglich. Die Justierung ist aber mit der Anordnung nach Fig. 1 durchführbar.

Fig. 2 zeigt den Verlauf des Phasenwinkels für einen Maßstab 1, bei dem die beiden Segmente 2 jedes Polpaares von gleicher Länge sind. Durch Art der Darstellung wird an jedem Segmentende ein Phasensprung um 180° (π) sichtbar. Das dient hier dazu, die effektive Lage der Segmentgrenzen zu zeigen. Zwischen gleichlangen Segmenten 2 stimmen die wirklichen und die effektiven Grenzen weitestgehend überein. Zwischen ungleichen Segmenten 2 sind Abweichungen erkennbar. Diese nehmen mit steigendem Abstand der Sensoren 4.1, 4.2 vom Maßstab 1 zu. Zur Verringerung dieser Abweichungen und zum Erreichen einer im wesentlichen über die ganze Maßstabslänge gleichen Amplitude der Magnetfeldkomponenten wird erfindungsgemäß die Dicke der magnetisierten Dauermagnetschicht des Maßstabs 2 in Abhängigkeit von der Länge der Segmente eingestellt. Fig. 3a zeigt den Vergleich des Verlaufs der Feldkomponenten Hₓ und H_{y} bei konstanter Dicke der Dauermagnetschicht 10; 11 und bei angepasster Dicke 12; 13. Der Verlauf der angepassten Dicke ist aus Fig. 3b zu entnehmen. Fig. 3a zeigt den trotz dieser Korrektur vorhandenen Abfall der Feldamplituden in randnahen Segmenten 2.

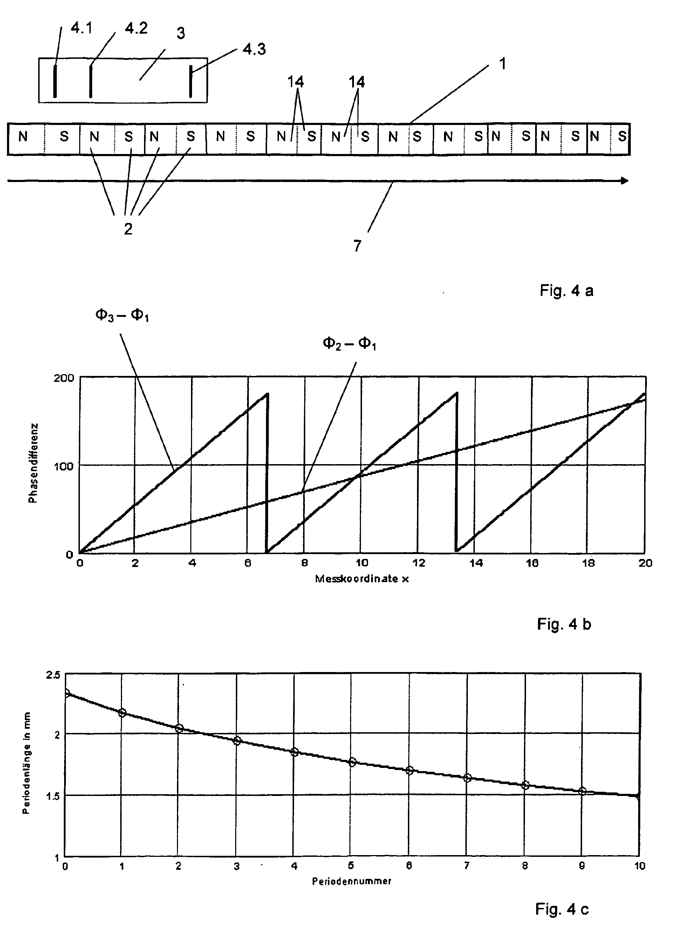

Ein weiteres Ausführungsbeispiel der Erfindung ist in Fig. 4a schematisch dargestellt. Entlang der Messrichtung x 7 erstreckt sich ein magnetischer Maßstab 1, der aus Gruppen 14 mit jeweils zwei Segmenten 2 gleicher Länge zusammengesetzt ist. Die Länge der Segmente 2 in den Gruppen 14 nimmt mit Fortschreiten in Messrichtung 7 ab. Über dem Maßstab 1 ist ein in Messrichtung 7 beweglicher Sensorträger 3 angeordnet, der drei Sensoren 4.1; 4.2; 4.3 trägt, die zur Ermittlung des Winkels der Feldrichtung am jeweiligen Ort geeignet sind. Die am jeweiligen Sensorort auf dem Sensorträger 3 eingezeichneten Striche sind die Symmetrielinien jeweils beider als Wheatstone-Brücken ausgebildeter magnetoresistiver Sensorelemente. Der Abstand der beiden Sensoren 4.1 und 4.2 ist so gewählt, dass die zwischen beiden Sensoren 4.1; 4.2 gemessene Phasendifferenz den Eindeutigkeitsbereich der Sensoren nicht überschreitet. Für anisotrope magnetoresistive Sensoren beträgt dieser 180°. Wie aus Fig. 4b zu entnehmen, steigt die Phasendifferenz Φ₂ - Φ₁, mit fortschreitendem Wert der Messkoordinate x, 7 streng linear an. Das ist dann der Fall, wenn die Längen der Gruppen 14 beispielsweise die in Fig. 4c angegebenen Werte aufweisen. Die Länge der Gruppen 14 stimmt hier jeweils mit der Periodenlänge des Magnetfeldverlaufs, gebildet durch ein S-N-Paar, überein. Aus der Phasendifferenz Φ₂ - Φ₁, kann eindeutig auf die Position des ersten Sensors 4.1 geschlossen werden. Zur Verbesserung der Auflösung und Genauigkeit der Positionsbestimmung kann die Phasendifferenz Φ₃ - Φ₁ herangezogen werden. Da der Abstand zwischen Sensor 4.3 und Sensor 4.1 dreimal so groß gewählt wurde wie der zwischen Sensor 4.2 und 4.1, steigt diese Phasendifferenz auch dreimal so stark wie die Differenz Φ₂ - Φ₁ an. Der Eindeutigkeitsbereich der Sensoren wird dabei überschritten und im gewählten Beispiel ergeben sich drei Perioden für die Phasendifferenz Φ₃ - Φ₁ auf der gesamten Maßstabslänge. Die Zuordnung, in welcher Periode die Position des Sensors 4.1 sich befindet, trifft die in Fig. 4a nicht dargestellte Auswerteschaltung auf der Basis des Wertes der Differenz Φ₂ - Φ_{1·} Eine weitere Steigerung von Auflösung und Genauigkeit wird erreicht, wenn aus der Phasendifferenz Φ₃ - Φ₁ nicht sofort auf die Position geschlossen wird, sondern wenn aus deren Wert ermittelt wird, welches Segment 2 dem Sensor 4.1 gegenübersteht, und dann aus der mit Hilfe des Sensors 4.1 ermittelten Phase erst die Position bestimmt wird. Mit diesem dreistufigen Verfahren ist im Vergleich mit dem zweistufigen Verfahren bei sicherem Erkennen des dem Sensor 4.1 gegenüber-stehenden Segmentes 2 bei gleicher Länge des Maßstabs 1 eine geringere Längenänderung von Gruppe 14 zu Gruppe 14 nötig, oder bei gleicher Längenänderung kann ein wesentlich längerer Maßstab 1 benutzt werden.

Eine weitere Erhöhung der Messgenauigkeit ist erreichbar, wenn in der Auswerteeinheit für alle drei Sensoren 4.1; 4.2; 4.3 die jeweils gegenüber stehenden Segmente 2 erkannt werden, aus dem vom entsprechenden Sensor 4.1; 4.2; 4.3 ermittelten Phasenwert des Magnetfeldes die Position gegenüber dem Anfang des jeweils erkannten Segmentes 2 mit hoher Auflösung bestimmt und unter Berücksichtigung des Versatzes der erkannten Segmente 2 als Mittelwert die Position des ersten Sensors 4.1 erhalten wird.

Die oben diskutierte Problematik der Randsegmente ist natürlich auch beim hier ausgewählten Beispiel relevant. Sie wurde aber aus Gründen der Übersichtlichkeit hier nicht nochmals behandelt.

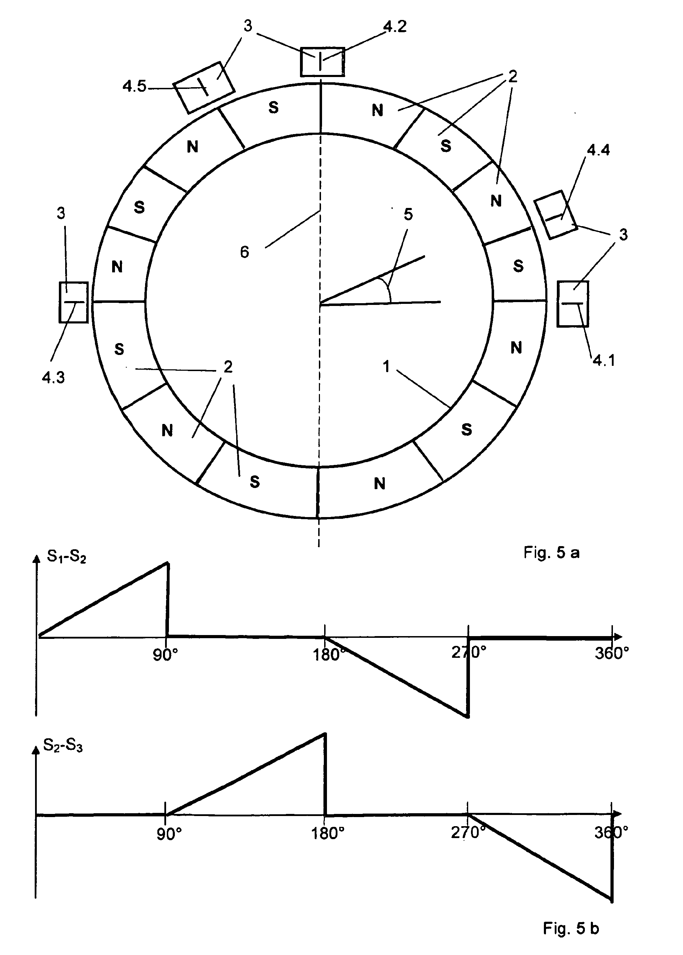

Fig. 5a zeigt schematisch ein Beispiel eines absoluten Winkelmesssystems entsprechend der Erfindung. Ein kreisförmiger Maßstab 1 (auch Polrad genannt) enthält in der oberen Hälfte dargestellt eine erste Gruppe von gleich langen magnetischen Segmenten 2 und in der unteren Hälfte eine zweite Gruppe von untereinander gleich langen Segmenten 2 mit einer anderen Länge. Beide Gruppen sind symmetrisch zur Symmetrieachse 6, die durch die Drehachse verläuft und mit dem Polrad 1 fest verbunden ist. Gemessen werden soll der mit 5 bezeichnete Winkel α. Dazu sind am Umfang des Polrades 1 auf Sensorträgern 3 die Sensoren 4.1 bis 4.5 um bestimmte Winkel gegen einander versetzt angeordnet. Die hier verwendeten magnetoresistiven Sensoren bestehen wie schon in den bisherigen Ausführungsbeispielen aus zwei Wheatstone-Brücken. Die beiden Brücken liefern hier jedoch dadurch einen Versatz der von ihnen angezeigten Phase des Feldes, dass sie auf dem Sensorträger 3 gegen einander verschoben angeordnet sind. Die Verschiebung beträgt im Falle von anisotrop magnetoresistiven Sensoren ein Viertel einer der beiden vorhandenen Segmentlängen und im Falle von GMR-Sensoren die Hälfte der Segmentlängen. Außerdem sind die die Brücken bildenden magnetoresistiven Schichtstreifen auf den Sensorträgern 3 so verteilt, dass eine Eliminierung oder zumindest Abschwächung von Oberwelleneinflüssen in ihren Signalen bewirkt wird.

In Fig. 5b sind die Funktionsverläufe der Phasendifferenzen zwischen den Sensoren 4.2 und 4.1 (S₂ - S₁) sowie zwischen den Sensoren 4.3 und 4.1 (S₃ - S₁) bei Drehung des Polrades 1 um 360° gesondert aufgetragen. Aus dem dargestellten Ergebnis kann in der nicht gezeigten Auswerteeinheit eindeutig ermittelt werden, welcher Quadrant dem ersten Sensor 4.1 gegenübersteht. Weiterhin kann aus dem Wert der Phasendifferenz der Wert des Winkels 5 ermittelt werden. Hier ist es besonders vorteilhaft, aus diesem vorläufigen Wert des Winkels 5 abzuleiten, welches Segment 2 dem ersten Sensor 4.1 bzw. dem dritten Sensor 4.3 gegenüber steht. Ist z. B. der Sensor 4.1 oberwellenfrei für die größere Segmentlänge und der Sensor 4.3 oberwellenfrei für die kürzere Segmentlänge, kann die Phase aller Segmente 2 bei Auswahl des jeweils geeigneten Sensors 4.1; 4.3 hochaufgelöst und mit hoher Genauigkeit gemessen werden und damit sind auch Winkelwerte mit diesen Eigenschaften erzielbar.

Leider gibt es bei der Winkelbestimmung in dem gesamten Bereich von 360° vier Punkte (0°; 90°; 180°; 270°), in denen alle Phasendifferenzen verschwinden. Zur Beseitigung dieser vier punktuellen Messunsicherheiten können beispielsweise zwei weitere Sensoren 4.4 und 4.5 benutzt werden. Werden die Phasendifferenzen S₄ - S₁ und S₅ - S₂ gebildet, dann gilt die in folgender Tabelle getroffene Zuordnung:

| α | S₄ - S₁ | S₅ - S₂ |
|---|---|---|
| 0° | 0 | 0 |
| 90° | >0 | 0 |
| 180° | >0 | >0 |
| 270° | 0 | >0 |

Diese Absolutmessung erfordert also den Einsatz von insgesamt fünf anisotrop magnetoresistiven Sensoren. Trotz dieses Aufwandes ist die angegebene Anordnung als vorteilhaft zu betrachten, wenn man die Schwierigkeiten berücksichtigt, die man bei Messsystemen überwinden muss, um mit anisotrop magnetoresistiven Sensoren die Drehung eines einzigen Magneten um 360° zu ermöglichen.

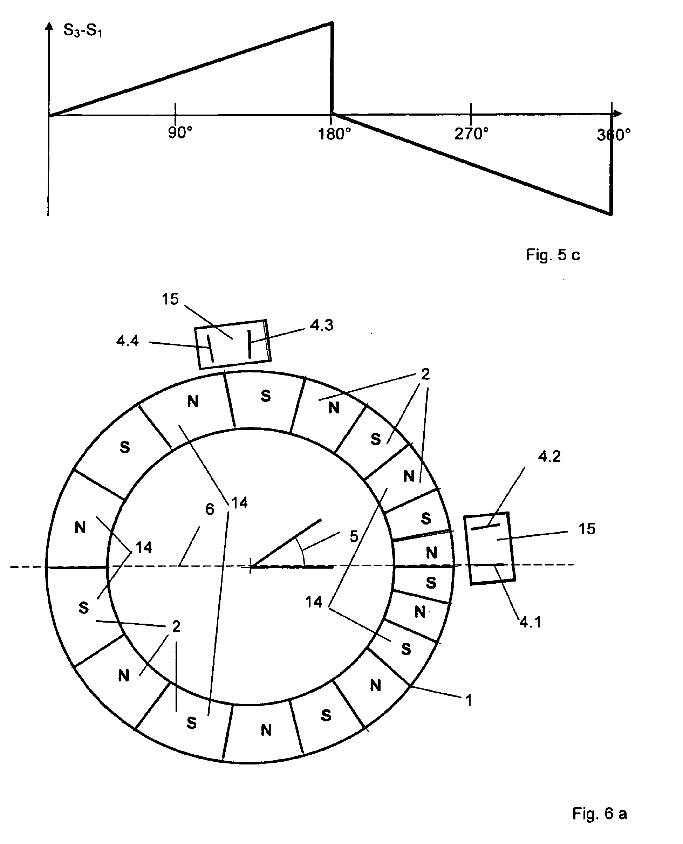

Vorteilhafter erscheint hier jedoch der Einsatz von GMR-Sensoren mit einem Eindeutigkeitsbereich von 360°. Für die Phasendifferenz der GMR-Sensoren 4.3 und 4.1 ergibt sich die in Fig. 5c gezeigte Grafik. Diese Differenz S₃ - S₁ ist im gesamten Messbereich von 360° eindeutig dem Winkel zuzuordnen, mit Ausnahme der Punkte 0° und 180°. Hier ist zur Herstellung der Eindeutigkeit nur ein zusätzlicher Sensor 4.4 erforderlich. Ist dieser um zwei kürzere Segmentlängen am Umfang des Polrades gegen den Sensor 4.1 versetzt angeordnet, dann ist die Phasendifferenz S₄ - S₁ bei einem Winkel von 0° gleich 0 und bei einem Winkel von 180° ist diese Differenz größer als 0. Die Vorteile beim Einsatz oberwellenkompensierter Sensoren sind hier wie oben beschrieben ebenfalls vorhanden.

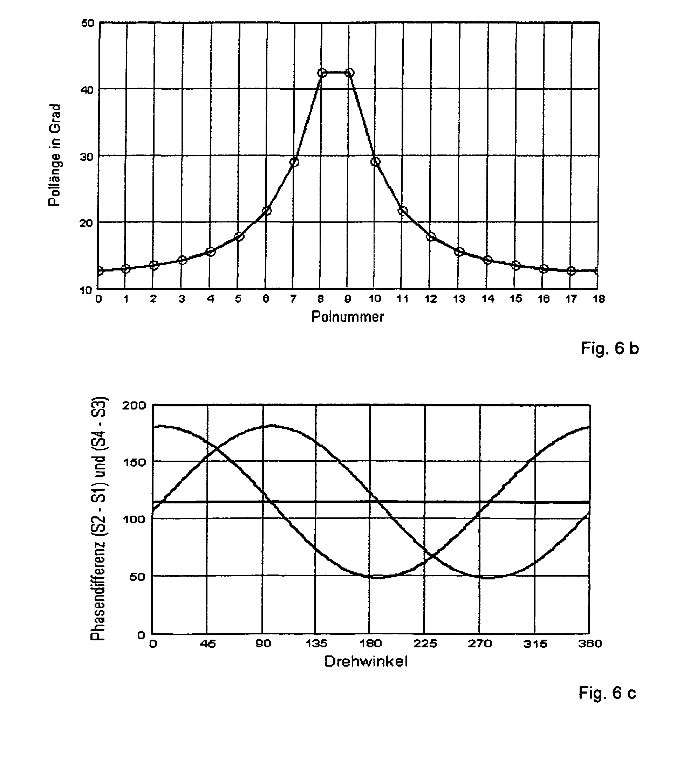

Den Aufbau eines weiteren absoluten Winkelsensors zeigt Fig. 6a schematisch. Ein Polrad (Maßstab) 1 ist in einem ersten Halbkreis in Richtung eines zunehmenden Winkels 5 aus magnetischen Segmenten stetig zunehmender Länge aufgebaut. Die Segmentlängen im zweiten Halbkreis sind zur Symmetrieachse 6 durch den Polradmittelpunkt symmetrisch. Gruppen 14 von Segmenten 2 gleicher Länge werden hier nicht durch benachbarte sondern durch symmetrisch angeordnete Segmente 2 gebildet. Am Polradumfang sind zwei um 90° versetzte Träger von Sensorpaaren 15 angeordnet. Auf.ihnen befinden sich jeweils zwei Sensoren 4.1; 4.2 und 4.3; 4.4 im gleichen Abstand. Es werden beispielsweise anisotrope magnetoresistive Sensoren mit jeweils zwei um 45° verdrehten Wheatstone-Brücken benutzt. Die Längen der Segmente 2 sind so gewählt, dass die Richtung β des Magnetfeldes bei einem vollen Umlauf des Winkels 5 von α = 0 bis 360° um das Polrad 1, das n Pole enthält, durch die Beziehung β(α) = α · (1 + n/2) + A. sin(α) gegeben ist. Dabei ist A eine Konstante. Ein Beispiel für die mit dieser Beziehung ermittelten Segmentlängen wird in Fig. 6b gezeigt. Die Segmentlänge ist hier durch die Ausdehnung der Nord- bzw. Südpole in Grad angegeben. Die Darstellung in Fig. 6c zeigt den Verlauf der Phasendifferenzen S₂ - S₁ und S₄ - S₃, die aus den Messwerten des Sensorpaares 4.1 und 4.2 bzw. 4.3 und 4.4 in der Auswerteeinheit ermittelt wurden, bei einem vollen Umlauf des Winkels 5. Es ergeben sich zwei sinusförmige Kurven mit einem Versatz von 90° gegeneinander. Mit Hilfe der Arcustangensinterpolation kann daraus in der Auswerteeinheit der Drehwinkel 5 eindeutig erkannt werden. Wie auch schon bei den vorigen Ausführungsbeispielen kann dieser Winkel auch zum Erkennen des dem Sensor 4.1 gegenüberstehenden Segmentes 2 genutzt werden und bei Berücksichtigen des mit dem Sensor 4.1 gemessenen Phasenwinkels des Magnetfeldes eine höhere Auflösung und Genauigkeit erreicht werden. Um die Einhaltung der Eindeutigkeit der mit der Arcustangensinterpolation zu unterziehenden Werte der Phasendifferenzen zu gewährleisten, sind bei der Dimensionierung der Segmente 2 unter Beachtung des Sensor-abstands für die Konstante A nur Werte zulässig, die zu Phasendifferenzen unter 180° führen. Bei Verwendung von GMR-Sensoren kann dieser Wert auf 360° erhöht werden. Weitere Vorteile in der Anordnung ergeben sich durch die GMR-Sensoren nicht.

Ein entscheidender Vorteil der Segmentverteilung nach Fig. 6a etwa gegenüber einer Anordnung mit monoton über den vollen Polradumfang zunehmender Segmentlänge besteht darin, dass sich benachbarte Segmente 2 nach Fig. 6a in ihrer Länge nur wenig unterscheiden. Damit kann eine Feldverteilung, die zur effektiven Verlängerung längerer Segmente 2 und Verkürzung kürzerer benachbarter Segmente 2 führt, durch die vorgeschlagene Anordnung weitestgehend vermieden werden. In der Anordnung mit monoton wachsenden Segmentlängen wären das kürzeste und das längste Segment unmittelbar benachbart. Hier wäre die effektive Segmentlängenänderung so groß, dass sie das kürzeste Segment um einen wesentlichen Anteil verkürzt und damit eine hohe Messgenauigkeit bei der Winkelmessung infrage stellt.

Die Anwendung der erfindungsgemäßen Merkmale kann zu vielen weiteren vorteilhaften Anordnungen und Verfahren bei der Absolutmessung von Winkeln und Positionen führen, die dann der vorliegenden Erfindung zuzuordnen wären. Besonders nahe liegend sind Winkelmesssysteme, die sich aus den hier beschriebenen Beispielen der Längenmessung und Längenmesssysteme, die sich aus den Beispielen der Winkelmessung unmittelbar ableiten lassen.

### Liste der Bezugszeichen:

- 1: Maßstab
- 2: magnetisches Segment
- 3: Sensorträger
- 4.1 bis 4.5: Sensor
- 5: Winkel α
- 6: Symmetrieachse
- 7: Messkoordinate x
- 8: aus dem Feld ermittelte Phase
- 9: idealer Phasenverlauf
- 10: Hₓ-Komponente bei konstanter Dicke
- 11: H_{y}-Komponente bei konstanter Dicke
- 12: Hₓ-Komponente bei variabler Dicke
- 13: H_{y}-Komponente bei variabler Dicke
- 14: Gruppe von Segmenten
- 15: Träger eines Sensorpaares

## Patentansprüche

1. Anordnung zur Absolutbestimmung der Linearposition oder der durch einen Winkel ausgedrückten Drehposition zweier relativ zueinander verschiebbarer oder drehbarer Körper, bei der ein erster Körper einen Maßstab mit einer Anzahl von in Messrichtung in ihrer Polung alternierenden magnetischen Segmenten und ein zweiter Körper mindestens zwei voneinander beabstandeten magnetfeldempfindliche Sensoren zur Ermittlung eines Winkels der Magnetfeldrichtung am jeweiligen Sensorort aufweist und die eine Auswerteeinheit umfasst, die aus den ermittelten Winkeln der Magnetfeldrichtungen eine Phasendifferenz bildet, die der gesuchten Position direkt zugeordnet ist, wobei eine Magnetspur des Maßstabs (1) aus mehreren in Messrichtung hintereinander angeordneten Gruppen (14) von jeweils mindestens zwei magnetischen Segmenten (2) aufgebaut ist, dass die Längen der magnetischen Segmente (2) in Messrichtung (7) in mindestens einer Gruppe (14) untereinander übereinstimmen und dass die Längen der magnetischen Segmente (2) der unterschiedlichen Gruppen (14) voneinander verschieden sind.

2. Anordnung nach Anspruch 1, bei der die Dicke der magnetischen Segmente (2) des Maßstabs (1) um so größer ist, je geringer ihre Länge in Messrichtung (7) ist.

3. Anordnung nach Anspruch 2, bei der die Dicke der Schicht magnetisierbaren Materials an einem bestimmten Ort des Maßstabes (1) um so größer gewählt ist, je geringer die Länge der magnetischen Segmente (2) an diesem Ort ist.

4. Anordnung nach Anspruch 2, bei der die Dicke der Schicht magnetisierbaren Materials des Maßstabes (1) über die gesamte Messlänge konstant ist, aber der magnetisierte Anteil der Schichtdicke variiert.

5. Anordnung nach Anspruch 1, bei der die Oberfläche des Maßstabs (1) mit einer nichtmagnetischen Schicht abgedeckt ist, deren Dicke ortsabhängig um so größer gewählt ist, je größer die Länge der Segmente (2) an dem entsprechenden Ort ist.

6. Anordnung nach Anspruch 1, bei der die Gruppen (14) der magnetischen Segmente (2) übereinstimmender Länge jeweils aus zwei sich direkt nebeneinander befindlichen Segmenten (2) entgegen gesetzter Magnetisierungsrichtung bestehen.

7. Anordnung nach Anspruch 6, bei der die magnet-feldempfindlichen Sensoren (4.1 bis 4.5) magnetoresistive Sensoren sind.

8. Anordnung nach Anspruch 7, bei der anisotrop magnetoresistive Sensoren aus jeweils zwei Sensorelementen bestehen, die als Messbrücken ausgeführt sind.

9. Anordnung nach Anspruch 8, bei der die Messbrücken um 45° gegeneinander verdreht sind.

10. Anordnung nach Anspruch 8, bei der die Messbrücken in einem Abstand, der einem Viertel der Länge von Segmenten (2) einer Gruppe (14) entspricht, angeordnet sind.

11. Anordnung nach Anspruch 10, bei der die Anordnung der magnetoresistiven Schichtstreifen, aus denen die Messbrücken bestehen, geeignet ist, Oberwellenanteile in den Brückensignalen zu verringern.

12. Anordnung nach Anspruch 8, bei der die Messbrücken in einem Abstand, der etwa einem Viertel der mittleren Segmentlänge entspricht, angeordnet sind.

13. Anordnung nach Anspruch 1, bei der zwei beabstandete Sensoren (4.1; 4.2) angeordnet sind.

14. Anordnung nach Anspruch 1, bei der ein erster und ein zweiter Sensor (4.1; 4.2) in einem ersten Abstand voneinander angeordnet sind, der so gering ist, dass die Phasendifferenz bei Überstreichen des gesamten Maßstabs (1) eindeutig dem Messkoordinatenwert zuzuordnen ist und der Abstand eines dritten Sensors (4.3) zum ersten Sensor (4.1) mindestens das doppelte des ersten Abstandes beträgt.

15. Anordnung nach Anspruch 1, bei der ein für Winkelmessungen vorgesehener Maßstab in Form eines Polrades (1) spiegelsymmetrisch in Bezug auf eine Ebene ist, in der die Drehachse liegt.

16. Anordnung nach Anspruch 15, bei der die Winkelausdehnung der magnetischen Segmente (2) so gewählt ist, dass die Richtung β des Magnetfeldes bei einem vollen Umlauf von α = 0 bis 360° um das Polrad (1), der n Pole enthält, durch die Beziehung β(α) = α · (1 + n/2) + A · sin(α) gegeben ist, mit A = const., und dass zwei Sensorpaare jeweils aus einem ersten Sensor (4.1) und einem beabstandeten zweiten Sensor (4.2) bestehend, um einen bestimmten Winkel gegeneinander versetzt sind.

17. Verwendung einer Anordnung nach einem der Ansprüche 1 bis 16, bei der mittels mindestens zweier voneinander beabstandeter magnetfeldempfindlicher Sensoren ein Winkel der Magnetfeldrichtung am jeweiligen Sensorort ermittelt wird und aus den ermittelten Winkeln der Magnetfeldrichtungen eine Phasendifferenz gebildet wird, die der gesuchten Position direkt zugeordnet ist, wobei daraus ein der Linear- oder Drehposition eindeutig zugeordnetes Ausgangssignal berechnet wird.

18. Verwendung nach Anspruch 17, bei der das Ausgangssignal aus einem ersten Signalanteil, der angibt, dem wievielten Segment (2) einer der Sensoren (4.1 bis 4.5) gegenübersteht, und aus einem zweiten Signalanteil, der die aus den Signalen dieses Sensors (4.1 bis 4.5) gewonnene Angabe, wie weit dieser Sensor (4.1 bis 4.5) vom Anfangpunkt des entsprechenden Segmentes (2) entfernt ist, ermittelt wird.

19. Verwendung nach Anspruch 18, bei der die ersten und zweiten Signalanteile für mehr als einen Sensor (4.1 bis 4.5) bestimmt werden, und dass die Positionsergebnisse unter Berücksichtigung der Sensorabstände gemittelt werden.

20. Verwendung nach Anspruch 18, bei der aus den je zwei Signalen des ersten Sensors (4.1) und eines beabstandeten zweiten Sensors (4.2) durch Arcustangensinterpolation in der Auswerteeinheit jeweils der Winkel der Feldrichtung am Ort des entsprechenden Sensors (4.1; 4.2) ermittelt und durch Differenzbildung der erste Signalanteil des Ausgangssignal gebildet wird.

21. Verwendung nach Anspruch 18, bei der aus den je zwei Signalen des ersten Sensors (4.1) und eines beabstandeten zweiten Sensors (4.2) nach Anspruch 10 in einem ersten Schritt durch Arcustangensinterpolation in der Auswerteeinheit jeweils der Winkel der Feldrichtung am Ort des entsprechenden Sensors ermittelt und durch Differenzbildung ein vorläufiger erster Signalanteil des Ausgangssignal gebildet wird, aus dem die Länge des dem ersten Sensor (4.1) gegenüberstehenden Segmentes (2) ermittelt wird, und das aus dieser Länge und dem Abstand der beiden Sensoren (4.1; 4.2) der Phasenunterschied zwischen den Feldrichtungen der Sensorelemente berechnet wird und in einem zweiten Schritt damit der erste Signalanteil erneut ermittelt wird.

22. Verwendung nach Anspruch 21 , bei der weitere Iterationsschritte durchgeführt werden.

23. Verwendung nach Anspruch 18 mit einer Anordnung nach Anspruch 14, bei der zunächst aus den je zwei Signalen der Sensoren (4.1; 4.2; 4.3) die Winkel der Feldrichtung am Ort des entsprechenden Sensors bestimmt werden, und aus der Differenz der Winkel des ersten und zweiten Sensors (4.1; 4.2) wird ermittelt, welche Periode der Differenz der Winkel des zweiten und dritten Sensors (4.2; 4.3) diesem Wert entspricht , und aus dem Phasenwert dieser Periode wird ermittelt, welches Segment (2) dem ersten Sensor (4.1) gegenübersteht.

24. Verwendung nach Anspruch 18 mit einer Anordnung nach Anspruch 16, bei der aus den Signalen der zwei Sensorpaare (4.1 und 4.2; 4.3 und 4.4) zwei mit 360° periodische Signale gewonnen werden, die gegeneinander Phasen verschoben sind, und die so ausgewertet werden, dass ein im Bereich von 360° eindeutiger Winkelmesswert erhalten wird.

25. Verwendung nach Anspruch 24, bei der die Phasenverschiebung 90° beträgt.

## Claims

1. Arrangement for the absolute determination of the linear position or the rotational position expressed as an angle of two bodies movable or rotatable in relation to one another, wherein a first body has a measuring rod with a number of magnetic segments alternating in their polarity in the direction of measurement, and a second body has at least two magnetic-field-sensitive sensors distanced from one another to determine an angle of the magnetic field direction at the relevant sensor location, and which comprises an evaluation unit which forms a phase difference from the determined angles of the magnetic field directions, said phase difference being allocated directly to the required position, wherein a magnetic track of the measuring rod (1) is made up of a plurality of groups (14), disposed successively in the direction of measurement, of at least two magnetic segments (2) in each case, wherein the lengths of the magnetic segments (2) in the direction of measurement (7) in at least one group (14) correspond to one another, and wherein the lengths of the magnetic segments (2) of the different groups (14) are different from one another.

2. Arrangement according to Claim 1, wherein the thickness of the magnetic segments (2) of the measuring rod (1) is greater, the shorter its length is in the measuring direction of measurement (7).

3. Arrangement according to Claim 2, wherein the thickness of the layer of magnetisable material at a specific location of the measuring rod (1) is selected as greater, the shorter the length of the magnetic segments (2) is at this location.

4. Arrangement according to Claim 2, wherein the thickness of the layer of magnetisable material of the measuring rod (1) is constant over the entire measurement length, but the magnetised portion of the layer thickness varies.

5. Arrangement according to Claim 1, wherein the surface of the measuring rod (1) is covered with a non-magnetic layer, the thickness of which is selected depending on the location as greater, the greater the length of the segments (2) is at a corresponding location.

6. Arrangement according to Claim 1, wherein the groups (14) of the magnetic segments (2) of corresponding length in each case consist of two segments (2) located directly next to one another with an opposite direction of magnetisation.

7. Arrangement according to Claim 6, wherein the magnetic-field-sensitive sensors (4.1 to 4.5) are magnetoresistive sensors.

8. Arrangement according to Claim 7, wherein anisotropic magnetoresistive sensors consist in each case of two sensor elements which are designed as measuring bridges.

9. Arrangement according to Claim 8, wherein the measuring bridges are rotated through 45° in relation to one another.

10. Arrangement according to Claim 8, wherein the measuring bridges are disposed at a distance corresponding to one quarter of the length of segments (2) of a group (14).

11. Arrangement according to Claim 10, wherein the arrangement of the magnetoresistive layer strips of which the measuring bridges consist is suitable for reducing harmonic components in the bridge signals.

12. Arrangement according to Claim 8, wherein the measuring bridges are disposed at a distance corresponding to roughly one quarter of the mean segment length.

13. Arrangement according to Claim 1, wherein two distanced sensors (4.1; 4.2) are disposed.

14. Arrangement according to Claim 1, wherein a first and a second sensor (4.1; 4.2) are disposed at a first distance from one another which is so small that the phase difference on sweeping over the entire measuring rod (1) can be uniquely allocated to the measurement coordinate value, and the distance of a third sensor (4.3) from the first sensor (4.1) is at least double the first distance.

15. Arrangement according to Claim 1, wherein a measuring rod provided for angle measurements is in the form of a magnet wheel (1) which is mirror-symmetrical in relation to a plane in which the axis of rotation lies.

16. Arrangement according to Claim 15, wherein the angular size of the magnetic segments (2) is selected in such a way that the direction β of the magnetic field in the case of a full rotation of α = 0 to 360° around the magnet wheel (1), which contains n poles, is given by the relationship β(a) = α · (1 + n/2) + A · sin(α), where A = const., and that two sensor pairs in each case consisting of a first sensor (4.1) and a distanced second sensor (4.2) are offset in relation to one another through a determined angle.

17. Use of an arrangement according to one of Claims 1 to 16, wherein an angle of the magnetic field direction is determined at the respective sensor location by means of at least two magnetic-field-sensitive sensors distanced from one another, and a phase difference is formed from the determined angles of the magnetic field directions and is allocated directly to the required position, wherein an output signal uniquely allocated to the linear position or rotational position is calculated therefrom.

18. Use according to Claim 17, wherein the output signal is determined from a first signal component which indicates the segment (2) which is located opposite one of the sensors (4.1 to 4.5), and from a second signal component [*containing*] the information obtained from the signals of this sensor (4.1 to 4.5) how far this sensor (4.1 to 4.5) is distanced from the starting point of the corresponding segment (2).

19. Use according to Claim 18, wherein the first and second signal components are determined for more than one sensor (4.1 to 4.5), and the position results are averaged taking into account the sensor distances.

20. Use according to Claim 18, wherein in each case the angle of the field direction at the location of the corresponding sensor (4.1; 4.2) is determined from the two signals in each case of the first sensor (4.1) and of a distanced second sensor (4.2) through arctan interpolation in the evaluation unit, and the first signal component of the output signal is formed through difference formation.

21. Use according to Claim 18, wherein in each case the angle of the field direction at the location of the corresponding sensor is determined from the two signals in each case of the first sensor (4.1) and of a distanced second sensor (4.2) according to Claim 10 in a first step through arctan interpolation in the evaluation unit and a provisional first signal component of the output signal is formed through difference formation, from which the length of the segment (2) located opposite the first sensor (4.1), and the phase difference between the field directions of the sensor elements is calculated from this length and the distance between the two sensors (4.1; 4.2), and the first signal component is thus determined once more in a second step.

22. Use according to Claim 21, wherein further iteration steps are carried out.

23. Use according to Claim 18 with an arrangement according to Claim 14, wherein the angles of the field direction at the location of the corresponding sensor are first determined from the two signals in each case of the sensors (4.1; 4.2; 4.3), and, from the difference between the angles of the first and second sensor (4.1; 4.2), the period of the difference between the angles of the first and second sensor (4.2; 4.3) which corresponds to this value is determined, and the segment (2) which is located opposite the first sensor (4.1) is determined from the phase value of this period.

24. Use according to Claim 18 with an arrangement according to Claim 16, wherein two signals periodic with 360° are obtained from the signals of the two sensor pairs (4.1 and 4.2; 4.3 and 4.4), said signals being phase-shifted in relation to one another and being evaluated in such a way that an angle measurement value unique in the range of 360° is obtained.

25. Use according to Claim 24, wherein the phase shift constitutes 90°.

## Revendications

1. Agencement pour la détermination absolue de la position linéaire ou de la position de rotation exprimée par un angle de deux corps mobiles en translation ou en rotation l'un par rapport à l'autre, dans lequel un premier corps présente une échelle avec un certain nombre de segments magnétiques de polarité alternante dans la direction de mesure et un deuxième corps au moins deux capteurs sensibles au champ magnétique distants l'un de l'autre pour déterminer un angle de la direction de champ magnétique à la localisation de capteur respective, et qui comprend une unité d'évaluation qui forme à partir des angles déterminés des directions de champ magnétique une différence de phase qui est directement associée à la position recherchée, dans lequel une piste magnétique de l'échelle (1) est constituée de plusieurs groupes (14) qui sont disposés les uns derrière les autres dans la direction de mesure et composés chaque fois d'au moins deux segments magnétiques (2), les longueurs des segments magnétiques (2) dans la direction de mesure (7) étant égales entre elles dans au moins un groupe (14) et les longueurs des segments magnétiques (2) des différents groupes (14) étant différentes les unes des autres.

2. Agencement selon la revendication 1, dans lequel l'épaisseur des segments magnétiques (2) de l'échelle (1) est d'autant plus grande que leur longueur dans la direction de mesure (7) est faible.

3. Agencement selon la revendication 2, dans lequel l'épaisseur de la couche de matériau magnétisable à une localisation déterminée de l'échelle (1) est choisie d'autant plus grande que la longueur des segments magnétiques (2) est faible à cette localisation.

4. Agencement selon la revendication 2, dans lequel l'épaisseur de la couche de matériau magnétisable de l'échelle (1) est constante sur toute la longueur de mesure, mais la part magnétisée de l'épaisseur de couche est variable.

5. Agencement selon la revendication 1, dans lequel la surface de l'échelle (1) est recouverte d'une couche non magnétique dont l'épaisseur est choisie d'autant plus grande en fonction de la localisation que la longueur des segments (2) à la localisation correspondante est grande.

6. Agencement selon la revendication 1, dans lequel les groupes (14) de segments magnétiques (2) de longueur égale sont composés chaque fois de deux segments (2) de sens de magnétisation opposé situés directement l'un à côté de l'autre.

7. Agencement selon la revendication 6, dans lequel les capteurs sensibles au champ magnétique (4.1 à 4.5) sont des capteurs magnétorésistifs.

8. Agencement selon la revendication 7, dans lequel des capteurs magnétorésistifs anisotropes sont composés chaque fois de deux éléments capteurs réalisés sous la forme de ponts de mesure.

9. Agencement selon la revendication 8, dans lequel les ponts de mesure sont tournés de 45° l'un par rapport à l'autre.

10. Agencement selon la revendication 8, dans lequel les ponts de mesure sont disposés à une distance qui correspond à un quart de la longueur des segments (2) d'un groupe (14).

11. Agencement selon la revendication 10, dans lequel l'agencement des bandes de couche magnétorésistive dont les ponts de mesure sont composés est apte à diminuer les composantes harmoniques dans les signaux des ponts.

12. Agencement selon la revendication 8, dans lequel les ponts de mesure sont disposés à une distance qui correspond à peu près à un quart de la longueur moyenne des segments.

13. Agencement selon la revendication 1, dans lequel deux capteurs (4.1 ; 4.2) distants sont disposés.

14. Agencement selon la revendication 1, dans lequel un premier et un deuxième capteur (4.1 ; 4.2) sont disposés à une première distance l'un de l'autre qui est assez faible pour que la différence de phase en cas de balayage de l'échelle (1) complète puisse être associée sans ambiguïté à la valeur de coordonnée de mesure et la distance d'un troisième capteur (4.3) au premier capteur (4.1) est au moins le double de la première distance.

15. Agencement selon la revendication 1, dans lequel une échelle sous la forme d'une roue polaire (1) prévue pour des mesures d'angle est symétrique par rapport à un plan dans lequel l'axe de rotation est situé.

16. Agencement selon la revendication 15, dans lequel l'étendue angulaire des segments magnétiques (2) est choisie de façon que la direction ß du champ magnétique lors d'une révolution complète de α = 0 à 360° autour de la roue polaire (1), qui comporte n pôles, soit donnée par la relation ß(α) = α · (1 + n/2) + A · sin(α), avec A = const., et que deux paires de capteurs composées chaque fois d'un premier capteur (4.1) et d'un deuxième capteur distant (4.2), soient décalées d'un angle défini l'une par rapport à l'autre.

17. Utilisation d'un agencement selon une des revendications 1 à 16, dans laquelle un angle de la direction de champ magnétique à la localisation de capteur respective est déterminée au moyen d'au moins deux capteurs sensibles au champ magnétique distants et, à partir des angles déterminés des directions de champ magnétique, il est formé une différence de phase qui est directement associée à la position recherchée et à partir de laquelle est calculé un signal de sortie associé sans ambiguïté à la position linéaire ou de rotation.

18. Utilisation selon la revendication 17, dans laquelle le signal de sortie est déterminé à partir d'une première composante de signal qui indique en face de quel segment (2) un des capteurs (4.1 à 4.5) se trouve et à partir d'une deuxième composante de signal qui contient l'indication obtenue à partir des signaux de ce capteur (4.1 à 4.5) de la distance à laquelle ce capteur (4.1 à 4.5) se trouve du point de départ du segment (2) correspondant.

19. Utilisation selon la revendication 18, dans laquelle les première et deuxième composantes de signal sont déterminées pour plus d'un capteur (4.1 à 4.5), et dans laquelle la moyenne des résultats de position est calculée en tenant compte des distances des capteurs.

20. Utilisation selon la revendication 18, dans laquelle l'angle de la direction de champ à la localisation du capteur correspondant (4.1 ; 4.2) est déterminé dans l'unité d'évaluation à partir des deux signaux à chaque fois du premier capteur (4.1) et d'un deuxième capteur distant (4.2) par interpolation de l'arctangente et par formation de différence de la première composante de signal du signal de sortie.

21. Utilisation selon la revendication 18, dans laquelle l'angle de la direction de champ à la localisation du capteur correspondant est déterminé dans l'unité d'évaluation à partir des deux signaux à chaque fois du premier capteur (4.1) et d'un deuxième capteur distant (4.2) selon la revendication 10 dans une première étape par interpolation de l'arctangente et par formation de différence d'une première composante de signal provisoire du signal de sortie, à partir de laquelle la longueur du segment (2) situé en face du premier capteur (4.1) est déterminée, et dans laquelle la différence de phase entre les directions de champ des éléments capteurs est calculée à partir de cette longueur et de la distance des deux capteurs (4.1 ; 4.2) et, dans une deuxième étape, la première composante de signal est de nouveau déterminée avec celle-ci.

22. Utilisation selon la revendication 21, dans laquelle d'autres étapes d'itération sont exécutées.

23. Utilisation selon la revendication 18 avec un agencement selon la revendication 14, dans laquelle les angles de la direction de champ à la localisation du capteur correspondant sont d'abord déterminés à partir des deux signaux à chaque fois des capteurs (4.1 ; 4.2 ; 4.3), et, à partir de la différence des angles des premier et deuxième capteurs (4.1 ; 4.2), il est déterminé quelle période de la différence des angles des deuxième et troisième capteurs (4.2 ; 4.3) correspond à cette valeur, et, à partir de la valeur de phase de cette période, il est déterminé quel segment (2) est en face du premier capteur (4.1).

24. Utilisation selon la revendication 18 avec un agencement selon la revendication 16, dans laquelle, à partir des signaux des deux paires de capteurs (4.1 et 4.2 ; 4.3 et 4.4), sont obtenus deux signaux périodiques sur 360° qui sont déphasés l'un par rapport à l'autre et qui sont évalués de façon à obtenir une valeur de mesure d'angle sans ambiguïté dans la plage de 360°.

25. Utilisation selon la revendication 24, dans laquelle le déphasage est de 90°.
